# EUROPÄISCHE PATENTANMELDUNG

(11) **EP 1 102 441 A1**
(43) Veröffentlichungstag der Anmeldung: **23.05.2001**
(21) Anmeldenummer: 99122900.6
(22) Anmeldetag: 18.11.1999
(51) Int. Cl.: H04L 12/56

(54) **Verfahren und Vorrichtung zur Verbesserung eines Datendurchsatzes in einem Kommunikationssystem**

(71) Anmelder: TELEFONAKTIEBOLAGET LM ERICSSON, 126 25 Stockholm (SE)
(72) Erfinder: Baucke, Stephan, Res. Dept. Ericsson Euro. Dt GmbH, 52134 Herzogenrath (DE); Meyer, Michael, 52062 Aachen (DE); Ludwig, Reiner, c/o Helga Hoeppner, 52355 Düren (DE)
(74) Vertreter: Mohsler, Gabriele

(57) **Zusammenfassung**

Die Erfindung stellt ein Verfahren und eine Vorrichtung zur Erhöhung eines Datendurchsatzes bei einer Datenübertragung über ein Kommunikationsnetz dar. Hierbei werden die Datenpakete auf der Sicherungsschicht auf redundante Datenpaketen untersucht (5). Bei einer temporären Übertragungsstörung kommt es auf der Transportschicht zu einer wiederholten Übertragung von nicht bestätigten Datenpaketen (1). Diese Datenpakete werden der Sicherungsschicht übergeben (2). Die Aufgabe der Sicherungsschicht besteht in der Untersuchung, ob das freigegebene Datenpaket ein redundantes Datenpaket eines bereits auf der Sicherungsschicht vorhandenen Datenpaketes ist (5). Bei Feststellung der Redundanz der Datenpakete wird ein redundantes Datenpaket verworfen (7). Eine Abspeicherung des Datenpaketes auf der Sicherungsschicht erfolgt, wenn entweder keine Datenpakete auf der Sicherungsschicht bereits vorhanden sind (4), oder wenn die Datenpakete nicht redundant sind (8).

## Beschreibung

Die Erfindung betrifft ein Verfahren und eine Vorrichtung zur Erhöhung eines Datendurchsatzes bei einer Datenübertragung über ein Kommunikationsnetz.

Insbesondere bei Kommunikationsnetzen mit geringer Übertragungsrate erweist sich als notwendig, Verfahren zu entwickeln, die die niedrigen Übertragungsraten zwischen einem Sender und einem Empfänger effizient ausnutzen. Zu Kommunikationsnetzen dieser Art gehören Mobilfunknetze wie beispielsweise GSM (Global System for Mobile Communication) oder GPRS (General Packet Radio Service).

Die Kommunikation zwischen Partnerinstanzen, das heißt zum Beispiel zwischen einem Sender und einem Empfänger wird mittels eines Protokollstapels realisiert. Ein Protokollstapel besteht aus mehreren übereinanderliegenden Protokollschichten. Hierbei findet eine Kommunikation zwischen den benachbarten Protokollschichten statt. Die empfangenen oder die zur Übertragung bereitgestellten Daten werden von einer Schicht zu der direkt benachbarten Schicht freigegeben. Die Aufgabe einer Schicht besteht unter anderem in der Aufarbeitung der Daten. Ein Bestandteil der Aufarbeitung der Daten ist ihre Segmentierung. Häufig überschreiten die Daten einer Schicht die Größe der Datenpakete, die über eine physikalische Verbindung übertragen werden können. Aus diesem Grund erfolgt eine Aufteilung einer Nachricht in kleinere Datenpakete, die aufeinanderfolgend für eine Übertragung angeordnet werden. Zusätzlich wird auf jeder Protokollschicht eine Formatierung der Daten vorgenommen. Die Formatierung der Daten beinhaltet insbesondere das Hinzufügen der für jede Protokollschicht charakteristischen Kontrolldaten. Meistens werden die Kontrolldaten am Anfang eines Datenpaketes in Form des sogenannten Kopffeldes oder/und am Ende in Form des sogenannten Endefeldes eingehängt. Die tatsächlichen Daten sind in dem Nutzdatenfeld enthalten.

Im folgenden wird die Aufarbeitung der Datenpakets anhand des TCP/IP Protokollstapels näher erläutert.

Der TCP/IP (Transmission Control Protokoll/Internet Protokoll) Protokollstapel ist der für die Internet Anwendungen standardisierte Protokollstapel. Dieser Protokollstapel besteht aus fünf Protokollschichten. Die oberste Schicht, die Anwendungsschicht, enthält die Anwendungen, die von einem Benutzer direkt genutzt werden, beispielsweise WWW, FTP oder Email. Die Anwendungsschicht kommuniziert mit der darunter angeordneten Transportschicht. Die Aufgaben dieser Schicht werden von Transportprotokollen, wie TCP (Transmission Control Protokoll) oder UDP (User Datagramm Protokoll) erfüllt. Im weiteren wird nur TCP näher behandelt, da dieses Transportprotokoll zur Kommunikation von nicht-echtzeit Anwendungen, wie beispielsweise WWW, FTP oder Email eingesetzt wird. Unter der Transportschicht ist die Netzwerkschicht mit dem Internet Protokoll (IP) angeordnet. Die zwei untersten Schichten, die Sicherungsschicht und die Bitübertragungsschicht können unter dem Begriff netzwerkorientierte Schicht zusammengefaßt werden, denn sie sind in Abhängigkeit von dem darunterliegenden Netz spezifisch definiert.

Das Transportprotokoll TCP leistet einen zuverlässigen Transportdienst von Daten zwischen zwei Kommunikationspartnern. Zuverlässigkeit ist hier im Sinne von Fehlerfreiheit, Reihenfolgetreue und Schutz vor Datenverlusten und Duplikaten zu verstehen. Das Transportprotokoll TCP wurde ursprünglich für den Einsatz in Festnetzen konzipiert. Um den Gegebenheiten eines Festnetzes gerecht zu werden, wurde eine Reihe von aufwendigen Algorithmen in TCP implementiert, um beispielsweise das Auftreten von Stauungen in Netzwerkknoten oder Überlastsituationen des Netzes zu vermeiden. Auf die einzelnen Mechanismen, wie zum Beispiel den Fenstermechanismus, das kumulative Bestätigungsschema, den sogenannten Slow-Start-Algorithmus oder einen Algorithmus zur Vermeidung von Stauungen, den sogenannten Congestion Avoidance Algorithmus wird hier nicht näher eingegangen. Die genaue Beschreibung dieser Verfahren kann aus "TCP/IP. Illustrated, Volume 1" von W. Richard Stevens entnommen werden.

Ein Verfahren, auf das an dieser Stelle näher eingegangen wird, bezieht sich auf die Erkennung und Korrektur von Paketverlusten.

Der Hauptmechanismus von TCP, mit dem der Verlust von Datenpaketen erkannt wird, besteht in der Verwendung von Zeitalarmen, den sogenannten Timeouts. Ein Zeitalarm hängt mit einer Zeitspanne zusammen, die für die Durchführung einer bestimmten Aufgabe vorgesehen ist. Wenn in dieser Zeitspanne die Aufgabe nicht realisiert wird, tritt ein Zeitalarm auf. Bei TCP ist beispielsweise eine Zeitspanne definiert, das sogenannte RTT (Round Trip Time), die die Zeit festlegt, die zwischen der Übergabe eines TCP-Paketes an die IP-Schicht und dem Empfang einer zugehörigen Bestätigungsnachricht von einem Empfänger, daß dieses Datenpaket korrekt empfangen wurde, vergeht. Mittels dieser Zeitspanne wird eine Anpassung an unterschiedliche Übertragungsbedingungen ermöglicht. Ausgehend von dem Mittelwert und der Varianz des RTT wird ein RTO (Retransmission Timeout) ermittelt. Ein RTO bezeichnet den Zeitpunkt, zu dem eine wiederholte Übertragung von Datenpaketen erfolgt, für die keine Bestätigungsnachricht für den Empfang dieser Datenpakete angekommen ist. Die genaue Ermittlung des RTO kann aus RFC 793, Transmission Control Protocol, September 1981 entnommen werden. Hierbei hat bei der zeitalarm-basierten Fehlererkennung die Genauigkeit der Ermittlung des RTO großen Einfluss auf den Durchsatz. Ist der Zeitalarm zu knapp bemessen, werden unnötig Datenpakete wiederholt. Ist er andererseits zu lang, vergeht übermäßig viel Zeit, bis der Verlust eines Datenpaketes bemerkt wird und das Datenpaket wiederholt werden kann. Die Ermittlung eines RTT erfolgt dynamisch während einer Übertragung, um auf diese Weise die Schwankungen in einer Übertragung aufzufangen. Besonders problematisch ist es bei Netzen, die eine besonders hohe Fehlerrate in einer Datenübertragung aufweisen und somit durch hohe Schwankungen in den Übertragungsraten charakterisiert sind. Zu diesen Netzen gehören die Mobilfunknetze, darunter fallen GSM (Global System for Mobile Communication), GPRS (General Packet Radio Service), UMTS (Universal Mobile Telecommunication System), EDGE (Enhanced Data rates for GSM Evolution) oder IMT-2000.

Ein erkannter Fehler bei Übertragung eines Datenpaketes wird mittels eines Verfahrens zur Sicherstellung eines zuverlässigen Dienstes korrigiert. Ein Beispiel für dieses Verfahren ist das ARQ (Automatic Repeat reQuest). Bei diesem Verfahren wird auf der Sender-Seite für jedes gesendete Datenpaket eine Kopie des Datenpaketes erstellt und gespeichert bis das gesendete Datenpaket von dem Empfänger als korrekt empfangen bestätigt ist. Der Empfänger überprüft das empfangene Datenpaket und bestätigt den korrekten Empfang mittels einer Bestätigungsnachricht oder verwirft das Datenpaket und teilt dem Sender die Notwendigkeit einer wiederholten Übertragung des gleichen Datenpaketes mit. Diese Mitteilung erfolgt entweder mittels einer Nachricht oder wenn die entsprechende Zeitspanne für den Empfang einer positiven Nachricht bei dem Sender, zum Beispiel das RTO, abgelaufen ist. In diesem Fall entnimmt der Sender aus dem Zwischenspeicher die Kopie des Datenpaketes und versendet diese erneut. Auf diese Weise werden die aufgetretenen Fehler korrigiert.

Zu einer Verschlechterung des Übertragungsdurchsatzes führt die von TCP verwendete Strategie der exponentiellen Vergrößerung des RTO, das sogenannte exponentielle Backoff. Diese Strategie wird zur Behandlung von Überlastsituationen verwendet. Aufgrund der Tatsache, daß auf den drahtgebundenen Übertragungsstrecken, für die ursprünglich TCP konzipiert wurde, die Übertragungsfehler im allgemeinen selten auftreten, ist der weitaus überwiegende Teil aller Paketverluste auf die durch Überlastung hervorgerufene Stauungen in Netzwerkknoten zurückzuführen. Aus diesem Grund werden in TCP Strategien zur Vermeidung der Entstehung von Stauungen, wie beispielsweise das sogenannte exponentielle Backoff, eingesetzt. Mit diesem Verfahren wird das RTO nach Auftreten eines Fehlers jeweils auf das doppelte des bisherigen RTO Wertes gesetzt. Angenommen, die erste Wiederholung der Übertragung eines nicht angekommenen Datenpaketes erfolgt nach 1.5 Sekunden nachdem das Datenpaket erstmalig verschickt wurde. Danach wird das RTO auf den doppelten Wert erhöht, das heißt eine erneute Wiederholung passiert zu den folgenden Zeitpunkten 3, 6, 12, 24, 48 und 64 Sekunden. Danach bleibt der Wert konstant, das heißt immer nach 64 Sekunden wird erneut versucht, das nicht bestätigte Datenpaket neu zu übertragen. 64 Sekunden ist die obere Grenze, die in der Implementierung von TCP/IP in dem Betriebssystem Unix 4.3BSD von Computer Systems Research Group in der University of California in Berkley festgelegt wurde.

Aus dem angegebenen Beispiel geht hervor, daß wenn während einer temporären Störung auf der Funkstrecke mehrere aufeinanderfolgende Wiederholungen verlorengehen, dies zu einem schnellen Anwachsen des RTO führt, im ungünstigsten Fall erfolgt nämlich eine wiederholte Übertragung eines Datenpaketes erst nach 64 Sekunden. Das bedeutet wiederum, daß unter Umständen viel Zeit vergeht bis die Übertragung wieder aufgenommen wird, wenn die temporäre Störung beendet ist.

Aus diesem Grund ist es effizienter, das Abtesten einer nicht verfügbaren Verbindung auf der Sicherungsebene durchzuführen. Die Sicherungsschicht ist für die sogenannte Punkt-zu-Punkt Verbindung zuständig, das heißt für die Verbindung zwischen zwei direkt kommunizierenden Netzknoten, und deswegen ist es auf der Sicherungsschicht nicht notwendig, Mechanismen zur Vermeidung von Überlastsituationen in Netzknoten, wie dies der Fall bei TCP ist, bereitzustellen. Aus diesem Grund wird auf der Sicherungsschicht ein TCP-Paket, das vorher auf der Netzwerkebene in ein IP-Paket eingeschachtelt und dann der Sicherungsschicht übergeben wurde, bei der Wiederaufnahme der Funktionalität einer Verbindung sofort für die Übertragung bereitgestellt. Die Zeit, in der ein Datenpaket auf der Sicherungsschicht zwischen gehalten wird, hängt von dem zugrundeliegenden Kommunikationsnetz ab. Wenn die Zeit jedoch entsprechend lang ist, so daß auf der TCP-Ebene zu einer wiederholten Übertragung eines Datenpakets kommt, führt dies dazu, daß bei einer andauernden Störung auf der Sicherungsebene mehrere Duplikate eines Datenpaketes zwischengespeichert werden.

Angenommen, die Verbindung ist für mehrere Minuten nicht funktionsfähig. Dies kann vorkommen, wenn beispielsweise ein Teilnehmer sich in eine Umgebung begibt, in der keine Funkverbindung möglich ist, beispielsweise in eine Garage. In diesem Fall versucht TCP 9 Minuten lang ein Datenpaket neu zu verschicken. Wenn das oben aufgeführte Beispiel, in dem die Zeitpunkte aufgezählt sind, zu denen eine Wiederholung erfolgt, an dieser Stelle herangezogen wird, dann heißt dies, daß es in 9 Minuten zu 12 wiederholten Übertragungen eines gleichen Datenpaketes kommt. In Folge dessen werden 12 Kopien des gleichen Datenpakets auf der Sicherungsschicht zwischengespeichert. Dies erfolgt unter der Annahme, daß die Zeit, in der die Datenpakete auf der Sicherungsschicht gehalten werden, entsprechend lang ist.

Demgemäß ist es die Aufgabe der vorliegenden Erfindung eine Methode und eine Vorrichtung zu schaffen, die eine effizientere Bereitstellung der Daten beim Sender für einen besseren Durchsatz bei einer Datenübertragung für paketorientierte Anwendungen gewährleistet.

Dies wird erfindungsgemäß gelöst durch die Lehre des Patentanspruches 1, 17 und durch die Lehre des Patentanspruches 20.

Vorteilhaft erweist sich hierbei die Erhöhung des Datendurchsatzes im Netz, denn aufgrund der Reduzierung der Anzahl an redundanten Datenpaketen oder sogar an Duplikaten, muß keine mehrfache Übertragung eines gleichen Datenpaketes über ein Kommunikationsnetzwerk durchgeführt werden.

Ein weiterer Vorteil erweist sich in der Reduzierung des Speicherbedarfs sowohl auf der Senderseite wie auch auf der Empfängerseite, die durch das Verwerfen von redundanten Datenpaketen auf der Sicherungsschicht beim Sender erzielt wird.

Weitere vorteilhafte Ausgestaltungen der Erfindung ergeben sich aus den Ansprüchen 2 bis 16 und den Patentansprüchen 18 und 19.

Im folgenden wird die Erfindung anhand von Ausführungsbeispielen und Figuren näher erläutert.

Folgende Figuren zeigen:
Fig.1: Ablaufdiagramm des erfindungsgemäßen Verfahrens,
Fig.2: Darstellung eines in einem Endgerät vorhandenen GPRS Protokollstapels,
Fig.3: Darstellung eines TCP-Kopffeldes,
Fig.4: Darstellung eines IP-Kopffeldes.

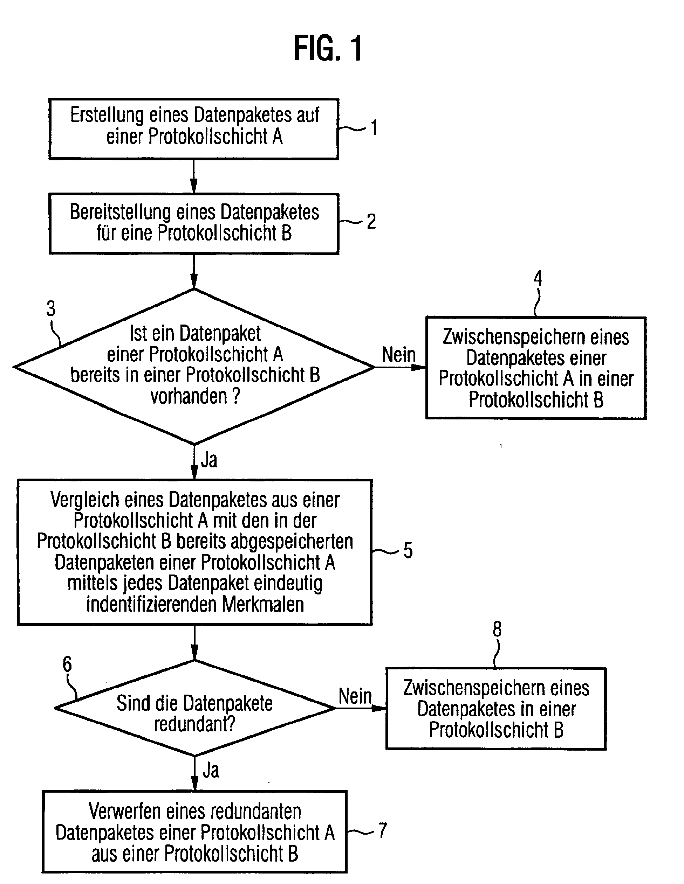

Im folgenden wird die Erfindung anhand der Figur 1 und des Patentanspruches 1 näher erläutert.

In einer ersten Vorrichtung, beispielsweise in einem Sender werden aus Anwendungsdaten aufgrund eines hierarchischen Aufbaus eines Protokollstapels Datenpakete erstellt, um die Anwendungsdaten für eine Übertragung bereitzustellen. Gemäß Figur 1 erfolgt in einem ersten Schritt 1 die Erstellung der Datenpakete einer ersten Protokollschicht, die im folgenden als Protokollschicht A bezeichnet wird. Diese Datenpakete sind durch entsprechende Merkmale eindeutig identifizierbar. Nach Erstellung der Datenpakete werden diese für mindestens eine weitere Protokollschicht, die im folgenden die Bezeichnung Protokollschicht B trägt, bereitgestellt, 2. Für den Fall, daß in der Protokollschicht B keine Datenpakete der Protokollschicht A bereits vorhanden sind, wird das aus der Protokollschicht A freigegebene Datenpaket abgespeichert, 4. Wenn jedoch in der Protokollschicht B festgestellt wird 3, daß in dieser Protokollschicht bereits Datenpakete der Protokollschicht A vorhanden sind, wird im Schritt 5 mittels der Merkmale, die jedes Datenpaket eindeutig identifizieren verglichen, ob das in der Protokollschicht B vorhandene Datenpaket, und das gerade freigegebene Datenpaket redundant sind. Hierbei hängt die Anzahl der Vergleiche, die durchgeführt werden müssen, von der Anzahl der in der Protokollschicht B vorhandenen Datenpakete der Protokollschicht A ab. Bei Feststellung einer Redundanz von zwei Datenpaketen, 6, wird ein Datenpaket verworfen, 7. Eine Abspeicherung des Datenpaketes der Protokollschicht A in der Protokollschicht B erfolgt, wenn die zum Vergleich stehenden Datenpakete nicht redundant sind, 8. Hierbei werden Datenpakete als redundant bezeichnet, wenn entweder diese identisch sind, oder wenn anhand der jedes Datenpaket eindeutig identifizierenden Merkmale festgestellt wird, daß ein Datenpaket in einem weiteren enthalten ist. In diesem Fall erfolgt die Verwerfung des Datenpaketes, das in dem weiteren enthalten ist. Weiterhin können Datenpakete der Protokollschicht A bei Freigabe an die Protokollschicht B in kleinere Datenpakete der Protokollschicht B unterteilt werden. In diesem Fall erfolgt die Feststellung der Redundanz von Datenpaketen durch den Vergleich des Datenpaketes der Protokollschicht A mit den Datenpaketen der Protokollschicht B, die zusammengefasst ein Datenpaket der Protokollschicht A ergeben. Im Falle, daß die Redundanz eines gerade aus der Protokollschicht A freigegebenen Datenpaketes und eines auf der Protokollschicht B in kleinere Datenpakete unterteilten Datenpaketes der Protokollschicht A festgestellt wird, erfolgt die Verwerfung entweder des gerade freigegebenen Datenpaketes der Protokollschicht A oder die Verwerfung der Datenpakete der Protokollschicht B, die das redundante Datenpaket der Protokollschicht A bilden.

Im folgenden wird die erfindungsgemäße Vorrichtung gemäß Patentanspruch 17 näher erläutert (ohne Figur). Bei der erfindungsgemäßen Vorrichtung werden auf einer ersten Protokollschicht, Protokollschicht A, mit Mitteln zur Erstellung von Datenpaketen, Datenpakete der Protokollschicht A erstellt. Das Mittel zur Bereitstellung von Datenpaketen stellt die Datenpakete der Protokollschicht A für mindestens eine weitere Protokollschicht, Protokollschicht B frei. Diese Datenpakete werden auf der Protokollschicht B mit Hilfe von Mitteln zum Zwischenspeichern der Datenpakete gespeichert, falls kein redundantes Datenpaket auf der Protokollschicht B bereits vorhanden ist. Die Feststellung der Redundanz von Datenpaketen wird mit Mitteln zum Vergleich von Datenpaketen realisiert. Der Vergleich wird mittels der jedes Datenpaket eindeutig identifizierenden Merkmale durchgeführt. Das Verschicken von den zur Übertragung bereitgestellten Datenpaketen wird mit Sendemitteln durchgeführt. Ein Empfang eines Datenpaketes bei einem Empfänger wird durch das Verschicken einer Bestätigungsnachricht quittiert. Der Empfang dieser Nachricht bei einem Sender erfolgt mit Empfangsmitteln.

Die vorliegende Erfindung findet ihren Einsatz in jeder Architektur, bei der in einer sendenden Einheit mindestens zwei separat arbeitende Sicherstellungsverfahren für einen zuverlässigen Dienst in einem Protokollstapel integriert sind. Die Aufgabe eines Sicherstellungsverfahrens für einen zuverlässigen Dienst erfüllt beispielsweise das ARQ-Verfahren. Bei dem ARQ-Verfahren wird auf der Sender-Seite von jedem übertragenen Datenpaket eine Kopie des Datenpaketes erstellt und gespeichert. Eine Entfernung der Kopie des gesendeten Datenpaketes aus dem Zwischenspeicher erfolgt, wenn eine Bestätigungsnachricht für einen korrekten Empfang von einem Empfänger angekommen ist. Beim Fehlen einer Bestätigungsnachricht oder beim Empfang einer negativen Bestätigungsnachricht, wird ein wiederholtes Verschicken des gleichen Datenpaketes durchgeführt. Das Fehlen einer Bestätigungsnachricht und wiederholtes Verschicken eines Datenpaketes wird mittels Zeitalarmen, den sogenannten Timeouts gesteuert. Die Erfindung findet ihren Einsatz in einer Architektur, in der das Sicherstellungsverfahren für einen zuverlässigen Dienst in einem Protokollstapel auf unterschiedlichen Protokollschichten, als Bestandteil von unterschiedlichen Protokollen eingegliedert ist. Beispielsweise ist es der Fall in einem Protokollstapel, in dem auf der Transportschicht das TCP und auf der Sicherungsschicht das RLC (Radio Link Control) eingesiedelt ist, oder in dem ein TCP über einem weiteren TCP eingeführt ist. Der letzte Fall tritt in einem GGSN Knoten in einem GPRS Netzwerk auf. Eine genauere Beschreibung kann aus GSM 03.60 Version 6.3.0 entnommen werden.

Im folgenden wird die Erfindung anhand eines Ausführungsbeispieles aus dem GPRS Kommunikationsnetzwerk näher erläutert.

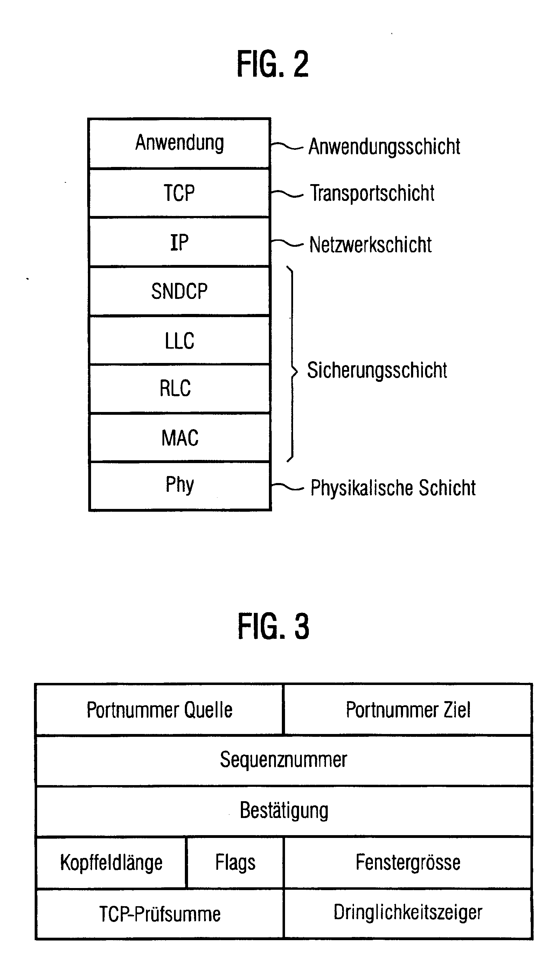

Ein Beispiel für ein Netzwerk, in dem die Erfindung eingesetzt werden kann, ist das GPRS (General Packet Radio Service). GPRS ist ein paketorientiertes Netz, dessen Hauptaufgabe in einer besseren Unterstützung von Internet Anwendungen besteht. Zwecks der Erläuterung der Erfindung wird im folgenden anhand der Figur 2 der GPRS-Protokollstapel, der im Endgerät eines Benutzers implementiert ist, dargestellt. Die linke Seite der Figur 2 zeigt einen Protokollstapel mit den entsprechenden Protokollen. Die Protokolle auf der physikalischen Schicht, die auf der rechten Seite der Figur 2 zu sehen ist, sind als Phys bezeichnet. Auf die Protokolle der physikalischen Schicht wird im folgenden nicht näher eingegangen. MAC, RLC, LLC und SNDCP stellen die Protokolle der Sicherungsschicht dar. Auf diesen Protokollen basiert das im folgenden aufgeführte Ausführungsbeispiel. Internet Protokoll (IP) repräsentiert ein Protokoll der Netzwerkschicht und TCP (Transmission Control Protocol) ein Protokoll der Transportschicht. Die Anwendungsschicht enthält die verfügbaren Anwendungen.

Im folgenden wird der gemäß Figur 2 dargestellte Protokollstapel näher erläutert.

Wie bereits erwähnt bildet die Anwendungsschicht die oberste Schicht, mit den auf dieser Schicht laufenden Anwendungen, wie beispielsweise WWW (World Wide Web). Diese Schicht kommuniziert direkt mit der Transportschicht, in diesem Fall ist es das TCP, dessen Aufgabe in Gewährleistung eines zuverlässigen Dienstes liegt. Zu diesem Zweck werden zuerst die Anwendungsdaten in TCP Datenpakete unterteilt. Ein TCP Datenpaket besteht aus einem Kopffeld und einem Datenfeld. In dem letzteren Feld ist ein Teil der Anwendungsdaten enthalten. Die Größe dieses Feldes hängt von der gewählten TCP Paketgröße ab. Der Aufbau eines TCP Kopffeldes ist in Figur 3 dargestellt. Ein TCP Nachrichtenkopffeld enthält Angaben, die unter anderem für die Fragmentierung und die Fehlererkennung benötigt werden. Figur 3 stellt ein komplettes TCP-Kopffeld mit den enthaltenen Kontrolldaten dar. Für die vorliegende Erfindung besitzen die Felder, Portnummer Quelle, Portnummer Ziel und die Sequenznummer eine besondere Wichtigkeit und auf diese wird im folgenden näher eingegengen. Die Sequenznummer identifiziert die Position der Daten des Datenpaketes in dem entsprechenden Datentransfer. Zu diesem Zweck wird bei dem Aufbau einer Verbindung ein Anfangswert für die Sequenznummer für den jeweiligen Datentransfer vereinbart. Danach wird die Sequenznummer für jedes Byte um Eins erhöht. Die Position eines Bytes im Datenstrom ergibt sich aus der Differenz der Sequenznummer dieses Bytes und der anfänglich vereinbarten Sequenznummer. Die Sequenznummer ermöglichen somit beim Empfänger eine reihenfolgetreue Zusammensetzung der eingetroffenen Datenpakete. Die Portnummer der Quelle und des Ziels identifizieren die sendende und empfangende Anwendung.

Außerdem werden für ein TCP Datenpaket verschiedene Zeitalarme gestartet, beispielsweise wird nach der Übergabe des Datenpaketes an die Netzwerkschicht auf der TCP-Ebene unter anderem das RTO (Retransmission Timeout) für dieses Datenpaket gesetzt. Eine weitere Behandlung der Daten erfolgt auf der Netzwerkschicht.

Die Aufgaben der Netzwerkschicht werden von dem Internet Protokoll, dem sogenannten IP erfüllt. Die Eigenschaft des IP ist der nicht zuverlässige Datenaustausch, das heißt, es wird vom IP keine Garantie gegeben, daß ein IP Datenpaket in der Tat zu einem Empfänger geliefert wird. Ebenfalls können IP Datenpakete in der Reihenfolge vertauscht oder dupliziert beim Empfänger ankommen. Es ist Aufgabe von TCP, die fehlerhafte Übertragung zu erkennen und die aufgetretenen Fehler zu beheben. Die Fehler können auf verschiedene Weise erkannt werden, wie dies bereits beschrieben wurde. Die Behebung des Fehlers erfolgt durch eine erneute Übertragung des fehlerhaften Datenpaketes. Zu diesem Zweck werden, auf der TCP-Protokollschicht die der Netzwerkschicht freigegebenen Datenpakete zwischengespeichert. Eine Entfernung eines Datenpaketes aus dem Zwischenspeicher beim Sender erfolgt erst dann, wenn sichergestellt wurde, daß das Datenpaket tatsächlich bei einem Empfänger korrekt empfangen wurde und dies passiert nach Empfang einer Bestätigungsnachricht.

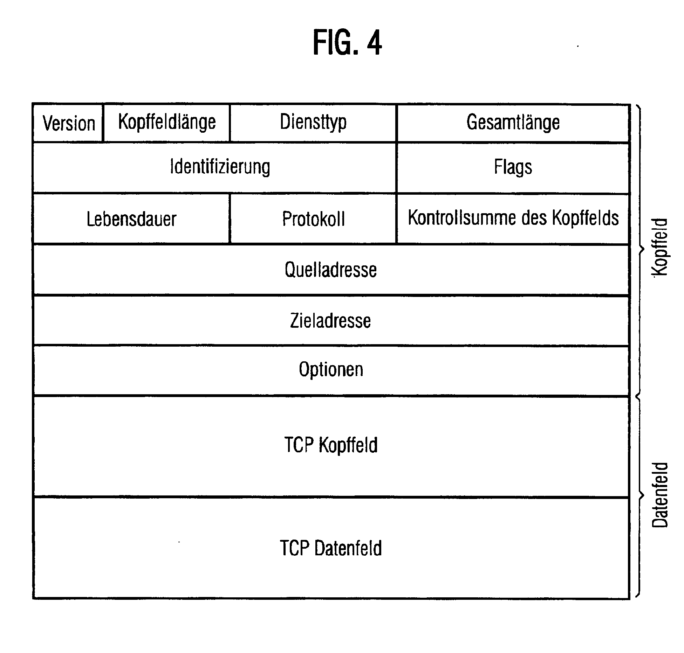

Eine wichtige Aufgabe von IP ist die Formatierung der TCP Datenpakete, genauer genommen das Verpacken der TCP Datenpakete in IP Datenpakete. Die von IP erzeugten IP-Datenpakete tragen den Namen IP-Datagramme. Gemäß Figur 4 besteht ein IP-Datagramm aus einem Kopffeld, das die Kontrolldaten enthält und aus einem Datenfeld, in dem ein TCP Datenpaket eingebettet ist. Die Ausführbarkeit der Erfindung basiert auf der Untersuchung eines IP-Datenpakets und auf dem Vergleich mit einem weiteren IP-Datenpaket. Hierbei werden insbesondere die Felder eines IP-Datenpaketes untersucht, aus denen eine eindeutige Identifizierung jedes Paketes gewährleistet wird. Aus diesem Grund werden diese Felder als jedes Datenpaket eindeutig identifizierende Merkmale bezeichnet und im folgenden näher behandelt.

Der Aufbau eines IP-Kopffeldes hängt mit der verwendeten Version des Internet Protokolls zusammen. Im folgenden werden beispielhaft zwei Versionen des IP, die IP Version 4, dem IPv4 und die IP Version 6, dem IPv6, untersucht. Figur 4 stellt ein IPv4-Datagramm dar.
Vollständigkeitshalber sind in der Figur 4 alle Felder des IP-Kopffeldes dargestellt, eine besondere Relevanz für die Erfindung weisen die Felder, Protokoll, Quelladresse und Zieladresse auf. Das Protokollfeld sagt aus, von welchem Protokolltyp der betrachtete Datenfluß ist, zum Beispiel TCP. Beim Vergleich von Datenpaketen werden zuerst diese Felder untersucht. Bei einer Nichtübereinstimmung ist daraus direkt zu schließen, daß diese Datenpakete nicht redundant sein können und ein Vergleich weiterer Felder nicht mehr notwendig ist. Die Felder Quelladresse und Zieladresse enthalten entsprechend die Adressen des Empfängers und des Senders. Im Falle, daß bei den zu vergleichenden Datenpaketen diese Felder übereinstimmen, muß eine weitere Untersuchung im TCP-Kopffeld vorgenommen werden, um die Redundanz oder sogar Gleichheit der Datenpakete sicherzustellen. Dies ist aus dem Grund notwendig, weil ein Benutzer während einer Sitzung meistens mehrere Anwendungen beansprucht, beispielsweise, wenn er eine elektronische Post nutzt und gleichzeitig im Internet surft. Aufgrund dessen, daß die beiden Anwendungen eventuell auf dem gleichen Endgerät ausgeführt werden und den Zugang zu dem gleichen Server fordern, stimmen sowohl die Zieladresse als auch die Quelladresse bei den zum Vergleich stehenden Datenpaketen überein. Für die verschiedenen Anwendungen und somit Datentransfers werden jedoch unterschiedliche Portnummern vergeben. Diese Portnummern identifizieren auf der Transportebene einen entsprechenden Datentransfer. Im Kopffeld eines TCP-Paketes sind die Informationen bezüglich der Portnummer enthalten und bei Unterscheidung des Datentransfers werden diese miteinander verglichen, um eindeutig die Unterschiedlichkeit der Datentransfers festzustellen. Erst wenn sowohl die Portnummern des Ziels bei den zum Vergleich stehenden Datenpaketen, als auch die Portnummern der Quelle übereinstimmen, handelt es sich um den gleichen Datentransfer. Mit dem Vergleich des Protokolltypes, der Ziel- und Quelladresse und der Portnummer des Ziels und der Quelle wird die Gleichheit der Datentransfers überprüft. Die Redundanz oder sogar die Gleichheit der Datenpakete wird ermittelt über einen zusätzlichen Vergleich der Sequenznummer im TCP-Kopffeld und der Felder mit der Gesamtlänge im IP-Kopffeld. Das Feld Gesamtlänge schließt das gesamte IP-Datagramm ein, das heißt sowohl den Nachrichtenkopf als auch die Daten. Bei Aufteilung der Daten in Pakete erhält jedes Paket, wie dies bereits beschrieben wurde, eine eindeutige fortlaufende Sequenznummer. Die Sequenznummer entspricht dem ersten im Datenfeld enthaltenen Datenbyte und diese gibt die Position des Datenbytes relativ zum ersten Byte im Datenstrom an. Zu diesem Zweck wird beim Verbindungsaufbau ein Anfangswert für die Sequenznummer vereinbart. Danach wird die Sequenznummer für jedes Byte im Datenstrom um Eins erhöht. Die Sequenznummer eines folgenden Datenpaketes wird anhand der Sequenznummer und der Gesamtlänge des vorherigen Datenpaketes ermittelt und die Position eines Bytes im Datenstrom ergibt sich aus der Differenz zwischen der Sequenznummer dieses Bytes und der anfänglichen Sequenznummer. Anhand dieser Daten wird die Redundanz eines Datenpaketes festgestellt, das heißt es wird ermittelt, ob ein Datenpaket in einem anderen enthalten ist oder ob diese sogar identisch sind.

Das beschriebene Verfahren zur Identifizierung der Redundanz eines Datenpaketes ist in der heutzutage verwendeten vierten Version des IPs, dem IPv4 implementiert. In der nächsten Version des Internet Protokolls, in der Internet Protokoll Version 6, dem IPv6, basiert dieses Verfahren auf dem gleichen Prinzip, das heißt auf dem Vergleich der in einem Datenpaket enthaltenen Informationen. Eine Zuordnung eines Datenpaketes zu einem Datentransfer kann effizienter mittels der sogenannten Datentransfersidentifikatoren, genannt auch "Flow-Label" realisiert werden. Das hauptsächliche Ziel der Datentransfersidentifikatoren besteht in einer schnelleren Zuordnung eines Datenpaketes zu einem Datentransfer, um beispielsweise die Bearbeitungszeit in den Zwischenknoten zu reduzieren. Abgesehen davon enthält ein Kopffeld eines IPv6-Datagramms ebenfalls eine Ziel- und eine Quelladresse, die untersucht werden können, weiterhin befindet sich in dem IPv6-Paket ein TCP-Datenpaket, das genauso wie bereits beschrieben analysiert werden kann.

Nach Erstellung der IP-Datagramme, werden diese der direkt darunterliegenden Schicht, der Sicherungsschicht übermittelt. Der Aufbau der Sicherungsschicht hängt von dem zugrundeliegenden Netz ab. Gemäß Figur 2 besteht die Sicherungsschicht in GPRS aus mehreren Zwischenschichten mit den entsprechenden Protokollen.

Das SNDCP (SubNetwork Dependent Convergence Protocol) gewährleistet eine Abbildung der verschiedenen Protokolle der höheren Schichten auf eine gemeinsame Verbindung, die von dem unter dem SNDCP liegenden LLC (Logical Link Control) unterstützt wird. Dies beinhaltet unter anderem das Multiplexen der Datenpakete aus den unterschiedlichen Protokollen und die Komprimierung des Kopffeldes, zum Beispiel des TCP/IP Kopffeldes. Auf dieser Schicht erfolgt ebenfalls eine Segmentierung der Daten in Pakete. In der Regel jedoch entspricht die Größe der SNDCP-Pakete der Größe der IP-Pakete.

Auf dieser Schicht werden die IP-Pakete zwischengespeichert, solange die Verbindung nicht für eine Übertragung verfügbar ist, zum Beispiel aufgrund einer temporären Störung. Wenn die Zeit der Störung entsprechend lange andauert, so daß in der Zwischenzeit der RTO Wert auf der TCP-Schicht abläuft, dann führt dies zur Initiierung einer erneuten Übertragung eines nicht bestätigten TCP-Datenpaketes. Hierzu entnimmt das TCP aus seinem Zwischenspeicher das Datenpaket und übergibt es der IP-Schicht, die daraus ein IP-Paket erzeugt. Dieses wird wiederum dem SNDCP übergeben. Das SNDCP untersucht das IP-Paket, insbesondere die Felder im IP- und TCP-Kopffeld und vergleicht diese mit den entsprechenden Feldern der auf dieser Schicht vorhandenen Datenpakete. Wenn festgestellt wird, daß ein identisches IP-Paket bereits auf der SNDCP-Schicht vorhanden ist, wird eines von den beiden verworfen. Im Falle, daß das IP-Paket kein redundantes Datenpaket eines bereits vorhandenen Datenpakets ist, wird dieses der SNDCP-Schicht übergeben und so lange auf dieser Schicht gehalten, bis die Verbindung wieder für eine Übertragung bereit ist.

Gemäß des hierarchischen Aufbaus eines Protokollstapels werden die Datenpakete von der SNDCP-Schicht der direkt darunterliegenden Schicht übergeben und gemäß Figur 2 ist dies die LLC (Logical Link Control) Schicht. Aufgrund dessen, daß das zugrundeliegende Netz durch hohe Übertragungsfehlerraten gekennzeichnet ist, wurden auf der Sicherungsschicht Protokolle entwickelt, die für eine zuverlässige Übertragung über eine physikalische Verbindung sorgen. Das LLC-Protokoll kann entweder in einem sogenannten nicht-zuverlässigen Modus arbeiten, in dem keine Rücksicht auf Paketverluste genommen wird oder in einem sogenannten zuverlässigen Modus, der einen sicheren Transport von Datenpaketen mittels einer Wiederholung von fehlerhaften Datenpaketen sicherstellt. Die Erfindung findet ihre Anwendung hauptsächlich in dem zuverlässigen Modus, in dem die Datenpakete zwischengespeichert werden, um diese beim Auftreten eines Übertragungsfehlers aus dem Speicher zu holen und neu zu übertragen. Ähnlich wie in der SNDCP Schicht kann die vorliegende Erfindung ebenfalls auf dieser Schicht, auf der die SNDCP-Pakete zwischengehalten werden, angewendet werden. Diese Schicht behält nämlich die SNDCP Datenpakete so lange im Zwischenspeicher, dem Buffer bis sichergestellt ist, daß diese Datenpakte korrekt übertragen und empfangen wurden. Wenn in der Zwischenzeit zu einer wiederholten Übertragung auf der Transportschicht kommt, wird dieses Datenpaket der IP Schicht, dann der SNDCP-Schicht und folglich der LLC-Schicht übergeben. Anhand der jedes Datenpaket eindeutig identifizierenden Merkmale wird das empfangene Datenpaket mit den auf der LLC Schicht vorhandenen Datenpaketen verglichen und bei Feststellung einer Redundanz ein redundantes Datenpaket verworfen.

Die LLC Datenpakete werden daraufhin der RLC (Radio Link Control) Schicht übergeben. Als erstes werden auf dieser Schicht die Datenpakete wieder in kleinere Pakete, die sogenannten Rahmen unterteilt. Auf der Basis dieser Rahmen wird die Fehlerkorrektur im ARQ-Verfahren durchgeführt, im Falle, daß das RLC im zuverlässigen Modus arbeitet. Es werden nämlich wie bei LLC zwei Modi unterstützt, der zuverlässige Modus, der die aufgetretenen Übertragungsfehler korrigiert werden und der nicht-zuverlässige Modus, in dem die Paketverluste nicht berücksichtigt werden. Im zuverlässigen Modus werden zum Zwecke der Fehlerkorrektur auf der RLC-Schicht die LLC-Pakete zwischengespeichert. Hiermit ist ebenfalls möglich, daß bei einer wiederholten Übertragung eines Paketes ein Vergleich von LLC-Paketen zwecks Herausfilterung und Verwerfung von redundanten LLC-Paketen auf der RLC Schicht durchgeführt wird.

Das in der Erfindung angegebene Ausführungsbeispiel bezieht sich auf ein GPRS Netz. Die Erfindung kann aber in jedem anderen Netz angewendet werden, in dem auf der Sicherungsschicht die aufgrund der Nichtverfügbarkeit einer Verbindung nicht geschickten Datenpakete entsprechend lange zwischengespeichert werden, so daß es zwischenzeitlich auf den höheren Ebenen zu einer wiederholten Übertragung eines auf der Sicherungsschicht vorhandenen Datenpaketes kommt. Aufgrund der Tatsache, daß das Abtasten einer zwischenzeitlich nicht verfügbaren Verbindung am besten auf der Sicherungsschicht durchzuführen ist, denn beispielsweise auf der TCP-Schicht im schlimmsten Fall das Abtasten alle 64 Sekunden aufgrund des sogenannten exponentiellen Backoff Algorithmus erfolgt, oder sogar das Abtasten aufgrund der Tatsache, daß TCP ein Ende-zu-Ende Protokoll ist, in der Mitte des Übertragungsweges nicht möglich ist, ist es folglich am besten die Erfindung, insbesondere das Verwerfen von redundanten Datenpaketen ebenfalls auf der Sicherungsschicht vorzunehmen, weil auf dieser Schicht ein unmittelbares Verschicken eines Datenpakets bei einer wieder verfügbaren Verbindung gewährleistet wird.

Die Erfindung kann aber in jedem anderen Netz angewendet werden, das über eine erste und mindestens eine weitere Protokollschicht verfügt. Hierbei ist es entscheidend, daß die Schichten über separat arbeitenden Sicherstellungsverfahren für einen zuverlässigen Dienst verfügen und, daß die Zeitspanne für das Zwischenspeichern eines Datenpaketes auf der mindestens einen weiteren Protokollschicht so lang ist, so daß ein wiederholtes Verschicken eines Datenpaketes auf einer ersten Protokollschicht initiiert wird und dies zur Entstehung redundanter Datenpakete auf der mindestens einen weiteren Protokollschicht führt.

In dem in der Beschreibung aufgeführten Ausführungsbeispiel, das auf dem GPRS Netz basiert, werden die Aufgaben der ersten Protokollschicht von TCP erfüllt und die Aufgaben der mindestens einen weiteren Protokollschicht von der Sicherungsschicht. Beide Schichten verfügen über ein Sicherstellungsverfahren für einen zuverlässigen Dienst, das mittels des ARQ Verfahrens erfüllt wird. Andere Beispiele von Netzen, in denen die Erfindung angewendet werden kann, sind ein GSM (Global System for Mobile Communication), ein UMTS (Universal Mobile Telecommunication System), ein EDGE (Enhanced Data rates for GSM Evolution) oder ein IMT-2000 Kommunikationsnetz ist.

## Patentansprüche

1. Verfahren zur Erhöhung eines Datendurchsatzes zur Übertragung von Daten über ein Kommunikationsnetz zwischen einem Sender mit einer ersten und mindestens einer weiteren Protokollschicht und einem Empfänger,
- bei dem in der ersten Protokollschicht Datenpakete mit eindeutig identifizierenden Merkmalen erstellt werden (1),
- bei dem die Datenpakete für mindestens eine weitere Protokollschicht bereitgestellt werden (2),
- bei dem die Datenpakete in der mindestens einen weiteren Protokollschicht mit bereits vorhandenen Datenpaketen mittels der jedes Datenpaket eindeutig identifizierenden Merkmalen verglichen werden (5),
- bei dem für den Fall, daß ein redundantes Datenpaket in der mindestens einen weiteren Protokollschicht vorhanden ist, eines der redundanten Datenpakete verworfen wird (7),
- bei dem für den Fall, daß ein Datenpaket in der mindestens einen weiteren Protokollschicht nicht vorhanden ist, dieses gespeichert wird (4),(8).

2. Verfahren nach Anspruch 1 bei dem die eindeutig identifizierenden Merkmale die Quelladresse, die Zieladresse, die Portnummer der Quelle, die Portnummer des Ziels, die Sequenznummer eines Paketes und die Länge eines Paketes sind.

3. Verfahren nach Anspruch 1 oder 2 bei dem die eindeutig identifizierenden Merkmale in mindestens einem Kopffeld enthalten sind.

4. Verfahren nach einem der vorherigen Ansprüche bei dem ein Kopffeld auf einer Protokollschicht zu einem Datenpaket hinzugefügt wird.

5. Verfahren nach einem der vorherigen Ansprüche bei dem auf jeder Protokollschicht auf die Daten in einem Datenpaket zugegriffen wird.

6. Verfahren nach Anspruch 1 bei dem der Empfang eines Datenpaketes bei einem Empfänger durch Verschicken von Bestätigungsnachrichten quittiert wird.

7. Verfahren nach einem der Ansprüche 1 oder 6 bei dem das Fehlen einer Bestätigungsnachricht oder der Empfang einer negativen Bestätigungsnachricht zu einem wiederholten Verschicken des gleichen Datenpaketes bei dem Sender führt.

8. Verfahren nach Anspruch 7 bei dem das wiederholte Verschicken des gleichen Datenpaketes durch eine vorherige Erstellung einer Kopie des verschickten Datenpaketes ermöglichst wird.

9. Verfahren nach einem der Ansprüche 1, 6, 7 oder 8 bei dem die Kopie eines Datenpaketes auf einer Protokollschicht so lange zwischengespeichert wird, bis eine Bestätigungsnachricht für einen korrekten Empfang eines Datenpaketes angekommen ist oder ein Zeitalarm auftritt.

10. Verfahren nach einem der Ansprüche 6 bis 9 bei dem ein wiederholtes Verschicken eines Datenpaketes von Zeitalarmen kontrolliert wird.

11. Verfahren nach einem der Ansprüche 6 bis 10 bei dem die Erstellung einer Kopie eines Datenpaketes, der Empfang einer Bestätigungsnachricht und das wiederholte Verschicken eines Datenpaketes mit einem Sicherstellungsverfahren für einen zuverlässigen Dienst sichergestellt wird.

12. Verfahren nach Anspruch 10 bei dem mit dem Sicherstellungsverfahren für einen zuverlässigen Dienst eine Korrektur eines fehlerhaft übertragenen Datenpaketes durchgeführt wird.

13. Verfahren nach einem der Ansprüche 10, 11 oder 12 bei dem das Sicherstellungsverfahren für einen zuverlässigen Dienst ein ARQ (Automatic Repeat Request) Verfahren ist.

14. Verfahren nach einem der Ansprüche 1 oder 6 bis 13 bei dem die Zeitspanne für das Zwischenspeichern eines Datenpaketes auf der mindestens einen weiteren Protokollschicht so lang ist, so daß ein wiederholtes Verschicken eines Datenpaketes auf einer ersten Protokollschicht initiiert wird und dies zur Entstehung redundanter Datenpakete auf der mindestens einen weiteren Protokollschicht führt.

15. Verfahren nach einem der vorherigen Ansprüche bei dem eine erste und mindestens eine weitere Protokollschicht Protokollschichten in einem Protokollstapel sind.

16. Verfahren nach Anspruch 1 bei dem das Kommunikationsnetz ein GSM (Global System for Mobile Communication), ein GPRS (General Packet Radio Service), ein UMTS (Universal Mobile Telecommunication System), ein EDGE (Enhanced Data rates for GSM Evolution) oder ein IMT-2000 Kommunikationsnetz ist.

17. Vorrichtung zur Erhöhung eines Datendurchsatzes zur Übertragung von Daten über ein Kommunikationsnetz zwischen einem Sender mit einer ersten und mindestens einer weiteren Protokollschicht und einem Empfänger mit,
- Mitteln zur Erstellung von Datenpaketen einer ersten Protokollschicht,
- Mitteln zur Bereitstellung der Datenpakete für mindestens eine weitere Protokollschicht,
- Mitteln zum Vergleich von Datenpaketen,
- Mitteln zum Zwischenspeichern der Datenpakete der ersten Protokollschicht auf der mindestens einen weiteren Protokollschicht,
- Mitteln zum Verwerfen von redundanten Datenpaketen.

18. Vorrichtung nach Anspruch 17 mit Sendemitteln zum Senden eines Datenpaketes über ein Kommunikationsnetz.

19. Vorrichtung nach Anspruch 18 mit Empfangsmitteln zum Empfangen von Bestätigungsnachrichten.

20. Verwendung des Verfahrens nach Anspruch 1 zur Erhöhung eines Datendurchsatzes bei einem Protokollstapel, der mindestens zwei separat arbeitende Sicherungsverfahren eines zuverlässigen Dienstes bereitstellt.
